# EUROPÄISCHE PATENTSCHRIFT

(11) **EP 4 212 765 B1**
(45) Veröffentlichungstag und Bekanntmachung des Hinweises auf die Patenterteilung: **31.07.2024**
(21) Anmeldenummer: 22194115.6
(22) Anmeldetag: 06.09.2022
(51) Int. Cl.: F16K 31/06, F16K 27/02

(54) **KOAXIALES MAGNETVENTIL**
COAXIAL SOLENOID VALVE
ÉLECTROVANNE COAXIALE

(30) Priorität: 13.01.2022 DE 202022000078 U
(43) Veröffentlichungstag der Anmeldung: 19.07.2023
(73) Patentinhaber: Samson Regulation S.A.S., 69120 Vaulx-en-Velin (FR)
(72) Erfinder: Zucht, Manfred, 8552 Ebiswald (AT); Grenard, Laurent, 69120 Vaulx-en-Velin (FR)
(74) Vertreter: Lohr, Jöstingmeier & Partner

(56) Entgegenhaltungen:
- DE-A1- 102006 003 543

## Beschreibung

### Technisches Gebiet

Die Erfindung betrifft ein Magnetventil mit einem Ventilgehäuse, an dem ein erster magnetischer Anker befestigt ist, sowie einem durch ein elastisches Vorspannelement und/oder durch einen Aktuator belasteten, beweglichen zweiten Anker.

### Stand der Technik

Zur automatischen Regelung von Fluidströmen beispielsweise in Getränkeautomaten werden u.a. Magnetventile eingesetzt. Häufig enthalten die durch das Ventil zu steuernden Fluidströme Schwebepartikel, die in Toträumen des Ventils agglomerieren. Wird ein so gebildetes Agglomerat beispielsweise durch eine Druckschwankung aus einem Totraum gespült, so kann es das Ventil verstopfen oder den Schließmechanismus blockieren. Zudem sind Toträume durch Spülen des Ventils nicht zuverlässig zu reinigen, was insbesondere im Lebensmittelbereich, beispielsweise bei Kaffeeautomaten, Milchaufschäumern oder Kaltgetränkespendern oder im Pharma-, Kosmetik- und Medizintechnik-Bereich bedenklich ist, da sich krankheitserregende Keime ansiedeln oder Fäulnisprodukte die Lebensmittel verunreinigen können.

Aus der DE 10 2006 003 543 A1 ist ein stromlos geschlossenes Magnetventil bekannt. Das bekannte Magnetventil hat ein Ventilgehäuse, an dem ein magnetischer erster Anker befestigt ist, sowie einen durch eine Feder belasteten, beweglichen magnetischen zweiten Anker. Nachteilig an diesem Magnetventil ist, dass an einigen Kontaktflächen Toträume ausgebildet werden. In diesen Toträumen können sich Schwebepartikel agglomerieren. Die Schwebepartikel können erheblich die Zuverlässigkeit des Ventils beeinträchtigen und die Bildung von krankheitserregenden Keimen und Fäulnisprodukten begünstigen.

### Darstellung der Erfindung

Der Erfindung liegt daher die Aufgabe zugrunde ein kostengünstiges, zuverlässiges und zumindest weitgehend verunreinigungsfreies Magnetventil bereitzustellen.

Diese Aufgabe wird durch ein Magnetventil nach Anspruch 1 gelöst. Vorteilhafte Ausgestaltungen der Erfindung sind in den Unteransprüchen angegeben.

Das Magnetventil hat eine Ventilhülse und einen ersten magnetischen Anker (im Folgenden erster Anker) die zu einem Ventilgehäuse verbunden sind und eine gemeinsamen Längsachse haben. Das Ventilgehäuse hat einen Ventilsitz. Ein zweiter magnetischen Anker ist in dem Ventilgehäuse (im Folgenden zweiter Anker) zwischen einer Offenstellung und einer Geschlossenstellung parallel zu der Längsachse verschiebbar gelagert. In der Offenstellung gibt der zweite Anker eine von dem Ventilsitz umschlossene Ventilsitzöffnung frei, die in der Geschlossenstellung durch den zweiten Anker verschlossen ist. Über ein elastisches Vorspannelement kann sich der zweite Anker zumindest mittelbar am ersten Anker abstützen. Durch Anlegen eines Magnetfeldes (z.B. durch Bestromen eines auf dem Ventilgehäuse sitzenden primären Elektromagneten - nachfolgend kurz "Elektromagnet" dieser ist von einem nachfolgenden sekundären Elektromagneten zu unterscheiden) kann der zweite Anker gegen eine von dem Vorspannelement ausgeübte Rückstellkraft in Richtung des ersten Ankers in eine sogenannte Endlage verschoben werden. Auch andere Antriebsarten sind möglich, der magnetische Antrieb ist lediglich ein bevorzugtes Beispiel. Wird das primäre Magnetfeld abgeschaltet, kann der zweite Anker durch die von dem Vorspannelement auf ihn ausgeübte Rückstellkraft und/oder einen Aktuator in seine Ausgangslage zurückverschoben werden.

Bei einem stromlos geschlossenen Magnetventil sitzt der Ventilsitz auf der dem ersten Anker abgewandten Seite des Ventilgehäuses, d.h. die oben als Ausgangslage bezeichnete Position des zweiten Ankers ist seine Geschlossenstellung. Das Vorspannelement übt daher eine in Richtung des Ventilsitzes wirkende Kraft auf den zweiten Anker aus. Die Endlage bei eingeschaltetem Magneten ist dann die Offenstellung des zweiten Ankers. Bei einem stromlos offenen Magnetventil ist der Ventilsitz am ersten Anker angeordnet oder zwischen dem ersten und dem zweiten Anker, so dass der Ventilsitz durch den zweiten Anker in dessen Endlage verschlossen wird. Bei einem stromlos offenen Magnetventil ist daher die Endlage die Geschlossenstellung und die Ausgangslage die Offenstellung. Das Vorspannelement übt in diesem Fall eine von dem Ventilsitz weg weisende Kraft auf den zweiten Anker aus.

Alternativ kann das elastische Vorspannelement durch einen steuerbaren Aktuator ersetzt oder ergänzt werden. Der Aktuator kann z.B. ein sekundärer elektromagnetischer Antrieb sein. Der Aktuator kann beispielsweise mit einer Steuerung verbunden sein, welche den Aktuator ansteuert, z.B. so dass der Aktuator den zweiten Anker in Richtung der entsprechenden Ausgangslage mit einer durch eine Steuerung einstellbaren Kraft beaufschlagt. Der Aktuator kann z.B. ein sekundärer Elektromagnet sein. Der sekundäre Elektromagnet kann am zweiten Anker angeordnet sein. Der sekundäre Elektromagnet kann an einer Außenfläche des zweiten Ankers, in einem ersten Abschnitt oder in einem zweiten Abschnitt des zweiten Ankers angeordnet sein. Der sekundäre Elektromagnet kann zudem innerhalb des zweiten Ankers, in einem ersten Abschnitt oder in einem zweiten Abschnitt des zweiten Ankers und an einer Innenwandung des zweiten Ankers angeordnet sein. Durch eine elektromagnetische Steuerung, welche den Strom durch den sekundären Elektromagnet steuert, kann der Strömungswiderstand und die vom Ventil erzeugten Geräusche weiter verringert und die Durchflussmenge gesteuert werden.

Unter dem Begriff "magnetisch" wird hier sowohl weichmagnetisch, - in diesem Fall kann der Elektromagnet mit Wechselspannung gespeist werden - als auch hartmagnetisch, in letzterem Fall wird der Elektromagnet mit Gleichspannung gespeist und ferromagnetisch verstanden.

Exemplarisch wird die Erfindung im Folgenden anhand eines stromlos geschlossene Magnetventiles erläutert. Die Erfindung zeigt ihre Wirkung jedoch ebenso bei stromlos offenen Magnetventilen.

Magnetventile haben eine Vorzugsströmungsrichtung, die im Rahmen dieser Anmeldung vereinfachend als Strömungsrichtung bezeichnet wird. Lediglich um die Darstellung der Erfindung zu vereinfachen, nehmen wir im Nachfolgenden an, dass die Strömungsrichtung parallel zur Längsachse von einem Einlass auf der der Ventilhülse abgewandten Seite des ersten Ankers durch diesen zu einer Auslassöffnung auf der dem ersten Anker abgewandten Seite der Ventilhülse verläuft. Damit soll keine Beschränkung der Durchflussrichtung erfolgen, sondern nur in der nachfolgenden Beschreibung eine Bezugnahme ermöglicht werden.

Somit hat das Ventilgehäuse eine Einlassöffnung, eine Auslassöffnung und eine Längsachse, wobei sich die Begriffe Einlassöffnung und Auslassöffnung, sowie einlassseitig und auslassseitig durch die oben definierte bevorzugte Strömungsrichtung eines Fluids durch das Ventil ergeben. Unter einem Fluid ist eine Flüssigkeit oder auch ein Gas zu verstehen. Zur Reduzierung des Strömungswiderstandes und zur Vermeidung von Ablagerungen sind die Einlassöffnung und die Auslassöffnung bevorzugt koaxial zur Längsachse.

Der erste Anker hat zwei Stirnflächen und einen die Stirnflächen entlang der Längsachse verbindenden Durchgangskanal. Die dem zweiten Anker abgewandte Öffnung des Durchgangskanals bildet im Beispiel des stromlos geschlossenen Magnetventils die Einlassöffnung des Ventilgehäuses. Der Durchgangskanal wird in radialer Richtung von einer Kanalwandung begrenzt und kann bei geöffnetem Ventil durchströmt werden Zudem hat der erste Anker eine Mantelfläche, die die beiden Stirnflächen verbindendet. Die Mantelfläche ist vorzugsweise zumindest in einem Abschnitt kreiszylindrisch.

Die den Einlass aufweisende Stirnfläche des ersten Ankers wird im Folgenden als einlassseitige Stirnfläche und die dem Einlass abgewandte Stirnfläche des ersten Ankers als auslassseitige Stirnfläche bezeichnet. Die Öffnung in der einlassseitigen Stirnfläche (Einlassöffnung) und die Öffnung der auslassseitigen Stirnfläche sind durch den Durchgangskanal verbunden. Wie bereits erwähnt beziehen sich die Begriffe einlassseitig und auslassseitig auf die oben definierte exemplarische Strömungsrichtung, d.h. auch in der entgegengesetzten Richtung kann eine Strömung durch das geöffnete Ventil fließen.

Die Ventilhülse hat eine Innenwandung, eine Außenwandung und eine Durchlassöffnung an ihrer dem ersten Anker abgewandten Stirnseite. Bei der hier angenommenen Vorzugsströmungsrichtung wäre die Durchlassöffnung die Auslassöffnung. Bei einem stromlos geschlossenen Ventil kann Durchlassöffnung zugleich die Ventilsitzöffnung sein. Die Durchlassöffnung ist vorzugsweise koaxial zur Längsachse. Der Ventilsitz und die Ventilhülse können einstückig sein. Bei großen Stückzahlen bietet es sich alternativ an die Ventilhülse aus einem (z.B. nahtlos gezogenen) Rohr zu fertigen und den Ventilsitz daran zu befestigen, z.B. durch Einpressen, Verschrauben, Verschweißen, Einbördeln oder dgl.

Die Ventilhülse und der erste Anker sind vorzugsweise starr miteinander verbunden. Wie übliche ist unter einer starren Verbindung zu verstehen, dass die verbundenen Elemente im montierten Zustand fest und unbeweglich zu- und miteinander verbunden sind. Die starre Verbindung kann, muss aber nicht lösbar sein. Die starre Verbindung kann formschlüssig, kraftschlüssig und/oder stoffschlüssig erfolgen.

Der erste Anker kann einlassseitig in die Ventilhülse eingreifen. Darunter ist zu verstehen, dass ein ventilhülsenseitiger Bereich des ersten Ankers in einen ankerseitigen (bezogen auf den ersten Anker) Bereich der Ventilhülse eingreift. Bevorzugt kann die Ventilhülse ein erstes Gewinde und der erste Anker ein komplementäres zweites Gewinde aufweisen. Im montierten Zustand greifen dann das erste Gewinde und das zweite Gewinde ineinander ein. Beispielsweise kann die Ventilhülse ein Innengewinde und der erste Anker ein Außengewinde haben. Es ist ebenso auch möglich, dass der erste Anker ein Innengewinde und die Ventilhülse ein Außengewinde aufweist (dann greift die Ventilhülse in den Anker ein). Eine Verbindung durch Verkleben, Verschweißen oder Klemmen ist alternativ oder zusätzlich möglich.

Durch eine koaxiale Orientierung der Ventilhülse zu dem ersten Anker kann das Magnetventil aus einfachen, auch in kleinen Stückzahlen günstig herstellbaren Drehteilen zusammengesetzt werden. Zudem weist das Ventil durch die koaxiale Orientierung einen geringen Strömungswiderstand auf und Ablagerungen in dem Ventil werden reduziert.

Bevorzugt hat das Magnetventil einen Spulensitz. Der Spulensitz kann z.B. von zumindest einem Segment der Außenwandung der Ventilhülse und zumindest einem Segment der Mantelfläche des ersten Ankers gebildet werden. Auf diesen Spulensitz kann ein Magnet, beispielsweise ein Elektromagnet, aufgesetzt werden. Wird der Elektromagnet erregt, so wird bei einem stromlos geschlossenen Magnetventil der zweite Anker in Richtung des ersten Ankers gegen die Kraft des Vorspannelements parallel zur Längsachse verschoben, wodurch der ansonsten verschlossene Auslass des Ventilsitzes freigegeben wird. Das Ventil kann nun koaxial von dem zu steuernden Fluid durchströmt werden

Der zweite Anker hat vorzugsweise zumindest eine Mantelfläche, eine dem Ventilsitz abgewandte Stirnfläche, eine dem Ventilsitz zugewandte Seite und eine Innenwandung. Die Mantelfläche des zweiten Ankers wird nachfolgend nur zur sprachlichen Abgrenzung gegenüber der Mantelfläche des ersten Ankers als "Außenfläche" bezeichnet. In dem Beispiel eines stromlos geschlossenen Magnetventils, wäre die dem Ventilsitz abgewandte Stirnfläche die einlassseitige Stirnfläche, wobei sich einlassseitig auf den Fluideinlass des Ventilgehäuses bezieht. Die dem Ventilsitz zugewandte Stirnfläche wäre entsprechend die auslassseitige Stirnfläche des zweiten Ankers. Entsprechend werden die Stirnflächen des zweiten Ankers und andere Elemente des Magnetventils mit Bezug auf die Einlass- bzw. Auslassöffnung des Ventilgehäuses benannt. Das elastische Vorspannelement kann eine Feder, beispielsweise eine Schraubenfeder, sein. Wie schon beschrieben kann das elastische Vorspannelement durch einen Aktuator ersetzt oder ergänzt werden.

An dem zweiten Anker ist eine Ventilsitzdichtung befestigt, die in der Geschlossenstellung an dem Ventilsitz anliegt und dadurch die Ventilsitzöffnung verschließt. In der Offenstellung wird zwischen der Ventilsitzdichtung und dem Ventilsitz ein Spalt ausgebildet, durch den das Fluid in oder aus der Ventilsitzöffnung hinein bzw. aus ihr heraus fließen kann. Die Ventilsitzdichtung kann beispielsweise die Form einer Pastille haben.

Vorzugsweise bilden die Außenfläche des zweiten Ankers und die Innenwandung der Ventilhülse ein Gleitlager aus. Das optionale Gleitlager schränkt den Freiheitsgrad des zweiten Ankers orthogonal zur Längsachse ein, wodurch der zweite Anker besonders zuverlässig in der Ventilhülse geführt werden kann. Dadurch wird eine zuverlässiges Öffnen und Schließen des Ventils gewährleistet. Die Außenfläche kann auf einem dem Ventilsitzes zugewandten Abschnitt verjüngt sein, d.h. eine kleinere Querschnittsfläche umschließen. Dadurch ergibt sich zwischen der Innenwandung, der Ventilhülse und der verjüngten Außenfläche des zweiten Ankers ein Freiraum. In der verjüngten Außenfläche kann wenigstens eine Fluidleitung münden.

Beispielsweise kann der zweite Anker auf seiner dem Ventilsitz zugewandten Seite einen geringeren Durchmesser als im sich daran anschließenden Bereich des zweiten Ankers haben.

Der zweite Anker hat in einer dem Ventilsitz abgewandten Stirnfläche ein sich parallel zu der Längsachse erstreckendes Sackloch. Das Sackloch kann eine von der einlassseitigen Stirnfläche des zweiten Ankers ausgehende und zu dessen Längsachse koaxiale Sackbohrung sein. Bevorzugt ist das Sackloch zylindrisch. Natürlich kann das Sackloch aber auch gefräst sein und muss nicht zylindrisch sein. Wie üblich ist unter einem Sackloch eine zu der Längsachse koaxiale Ausnehmung zu verstehen, die das Werkstück nicht vollständig durchdringt wie eine Durchgangsbohrung und folglich also eine bestimmte Tiefe hat.

Das Sackloch ist über die wenigstens eine Fluidleitung mit einem Freiraum auf der dem Ventilsitz zugewandten Seite des zweiten Ankers kommunizierend verbunden. Von dem Sackloch können auch zwei oder mehr Fluidleitungen abzweigen, die das Sackloch mit dem Freiraum kommunizierend verbinden. Anders formuliert, kann der Freiraum, auf der dem Ventilsitz zugewandten Seite des zweiten Ankers beispielsweise durch eine verjüngte Außenfläche des zweiten Ankers im Bereich des Ventilsitzes gebildet werden und die Fluidleitungen können ausgehend vom Sackloch in Ausnehmungen in der verjüngte Außenfläche des zweiten Ankers münden. Die wenigstens eine Fluidleitung kann in wenigstens einer (z.B. ringnutförmigen) Ausnehmung auf der verjüngten Außenfläche münden. Wenn mehrere Fluidleitungen vorgesehen sind, münden diese bevorzugt in der gleichen Ringnut. Besonders bevorzugt beträgt der Winkel zwischen den Achsen der Ausnehmungen und der Achse der Sackbohrung zwischen 90° und 165°, insbesondere zwischen 105° und 155°. Die Fluidleitung kann in Bezug auf die Längsachse in Richtung der Auslassöffnung einen Winkel von 30° - 90°, insbesondere 30° bis 45° aufweisen. Ein Winkel von 30° ist besonders bevorzugt, wobei Abweichungen von ±15° oder ±10°, oder ±5° oder ±2.5° oder ±1° zulässig sind und kleinere Abweichungen bevorzugt sind. Diese Winkel haben sich als besonders strömungsgünstig herausgestellt, d.h. Toträume werden vermieden.

Die einander gegenüberliegenden Stirnfläche des ersten und des zweiten Ankers begrenzen vorzugsweise einen von der Innenwandung der Ventilhülse umschlossenen Hohlraum in axialer Richtung. Der Hohlraum kann zumindest näherungsweise zylindrisch sein, bevorzugt zumindest näherungsweise kreiszylindrisch. Bei einem stromlos geschlossenen Magnetventil verbindet der Hohlraum die auslassseitige Öffnung des Durchgangskanals mit der einlassseitigen Öffnung des Sacklochs kommunizierend, wodurch ein Fluid vom Einlass durch den Durchgangskanal über den Hohlraum in das Sackloch strömen kann. Vom Sackloch gelangt das Fluid über die wenigstens eine Verbindungsleitung, beispielsweise eine Fluidleitung, in den auslassseitig des zweiten Ankers gebildeten Freiraum.

Vorzugsweise greift der erste Anker mit seiner dem zweiten Anker zugewandten Stirnfläche in die Ventilhülse ein, wodurch ein Spalt zwischen der Mantelfläche des ersten Ankers und der Innenwandung der Ventilhülse ausgebildet wird. Der Spalt hat eine hohlraumseitige Spaltöffnung. Vorzugsweise ist am Übergang von der Spaltöffnung zum Hohlraum ein Dichtungselement, wodurch die Spaltöffnung hohlraumseitig gegen den Hohlraum abdichtet wird. Durch das (wenigstens eine) Dichtungselement wird zuverlässig verhindert, dass sich Fluidreste oder Schwebeteilchen in dem Spalt ansammeln. Das Risiko einer Verkeimung des Magnetventils wird daher durch das Dichtungselement reduziert. Anders formuliert, bildet der durch das Eingreifen des ersten Ankers in die Ventilhülse ausgebildete Spalt einen Totraum in dem Magnetventil, der vorzugsweise durch das Dichtungselement vollständig vom Hohlraum getrennt wird.

Der von dem Dichtungselement verschlossene Spalt kann z.B. ein Gewindespalt sein, der sich beim Einschrauben eines Außengewindes auf der Mantelfläche des ersten Ankers in ein komplementäres Innengewinde der Ventilhülse ergibt. Natürlich kann das Gewinde der Ventilhülse als Teil der Innenwandung der Ventilhülse und das komplementäre Gewinde des ersten Ankers als Teil der Mantelfläche des ersten Ankers verstanden werden. Der Spalt kann je nach Art der Verbindung des ersten Ankers mit der Ventilhülse beispielsweise ein Zylinderspalt oder ein Gewindespalt sein.

Die Innenwandung der Ventilhülse kann eine ringförmige Ausnehmung haben. Vorzugsweise sitzt in der ringförmigen Ausnehmung das Dichtungselement.

Dadurch wird zum einen die Montage vereinfacht und zum anderen eine gute Abdichtung des Spalts ermöglicht. Entsprechend ist die ringförmige Ausnehmung in axialer Richtung vorzugsweise unmittelbar am auslassseitigen Ende des ersten Ankers angeordnet. Die ringförmige Ausnehmung kann beispielsweise durch eine Vergrößerung des Innendurchmessers der Ventilhülse erzeugt werden, z.B. in Form einer Ringnut. Wie üblich entspricht der Innendurchmesser der Ventilhülse dem Abstand zwischen den Schnittpunkten einer orthogonal durch die Längsachse verlaufenden Geraden mit der Innenwandung der Ventilhülse. Der Innendurchmesser der Ventilhülse kann beispielsweise durch das Abtragen der Innenwandung in Richtung der Außenwandung der Ventilhülse vergrößert werden. Dies kann beispielsweise durch Bohren, beispielsweise Gewindebohren, oder Fräsen erfolgen. Einlassseitig kann die Ventilhülse ein Innengewinde haben, an das sich auslassseitig die ringförmige Ausnehmung anschließen kann.

Am Übergang der Ventilhülse zur ringförmigen Ausnehmung kann vorzugsweise eine Auflagefläche ausgebildet sein, die vorzugsweise ein in axialer Richtung in Richtung des ersten Ankers weisendes Widerlager bildet. Das Dichtungselement kann daher zwischen dem auslassseitigen Ende des ersten Ankers und der Auflagefläche eingespannt werden. Folglich kann der Spalt zwischen der Innenwandung der Ventilhülse und der Mantelfläche des ersten Ankers zuverlässig gegenüber dem Innenraum der Ventilhülse abgedichtet werden. In anderen Worten ist das Dichtungselement vorzugsweise zwischen der in Richtung des ersten Ankers weisenden Auflagefläche und der gegenüberliegenden Stirnfläche des ersten Ankers eingespannt, wodurch die holraumseitige Spaltöffnung verschlossen wird. Das Dichtungselement kann dabei einen Teil des von dem Hohlraum ausgebildeten Volumens einnehmen. Alternativ kann die Innenwandung der Ventilhülse keine ringförmige Ausnehmung haben. Das Dichtungselement kann zwischen der Auflagefläche und der auslassseitige Stirnfläche des ersten Ankers angeordnet sein. Hierbei können weitere Toträume reduziert und die magnetische Wirkung verbessert werden.

Besonders bevorzugt hat die Mantelfläche des ersten Ankers an ihrem Übergang in die auslassseitige Stirnfläche des ersten Ankers eine Ringnut. Das Dichtungselement kann beispielsweise zwischen den die Ringnuten axial begrenzenden Flächen des ersten Ankers und der Auflagefläche positioniert, beispielsweise eingeklemmt und/oder eingespannt, sein. Alternativ kann der erste Anker keine Ringnut aufweisen. Das Dichtungselement kann zwischen auslassseitige Stirnfläche des ersten Ankers und der Auflagefläche positioniert, beispielsweise eingeklemmt und/oder eingespannt, sein. Hierdurch können zusätzliche Toträume vermieden werden.

Allgemeiner formuliert bedeutet, heißt das, dass die auslassseitige Stirnfläche des ersten Ankers auf das Dichtungselement eine Kraft in Richtung der Auflagefläche ausüben kann, und im Gegenzug die Auflagefläche eine Kraft in Richtung der auslassseitigen Stirnfläche des ersten Ankers ausüben kann. So kann das Dichtungselement zwischen der Auflagefläche und der auslassseitigen Stirnfläche des ersten Ankers eingespannt werden. Infolgedessen kann der Spalt vollständig gegenüber dem Hohlraum abgedichtet werden.

Die vollständige Abdichtung des Spalts ist bevorzugt, um zu verhindern, dass sich Schwebepartikel in dem Spalt agglomerieren. Die Gefahr des Ansiedelns krankheitserregender Keime oder von Fäulnisprodukten ist bei dem zum Hohlraum offenen Spalt besonders groß, da die radialen Bereiche des Hohlraums nicht direkt durchströmt werden. Der zum Hohlraum geöffnete Spalt ist zum einen besonders anfällig für die Ablagerung von Schwebstoffen und andererseits werden die im Spalt Abgelagerten Schwebstoffe nicht ausgespült. Dies kann zur Bildung von Krankheitserregenden Keimen und Fäulnisprodukten führen. Zudem befindet sich der Spalt in dem Bereich, in dem der erste Anker in die Ventilhülse eingreift. Ein Agglomerieren von Schwebstoffen in diesem Bereich kann dazu führen, dass eine Demontage des ersten Ankers und der Ventilhülse nahezu unmöglich wird.

Das Dichtungselement kann ein elastischer Dichtring, beispielsweise ein O-Ring sein. Wie bekannt, kann ein O-Ring einen kreisförmigen, einen ellipsoiden oder einen rechteckigen Querschnitt aufweisen. Jede andere Form eines Dichtungselements ist jedoch auch denkbar. Das Anbringen eines Dichtrings hat gegenüber einem vollständigen Verfüllen des Spaltes mit einer (vorzugsweise aushärtenden) Dichtmasse den Vorteil, dass der erste Anker und die Ventilhülse trotz Dichtungselement einfach getrennt werden können. Wird der Spalt komplett mit einem dichtenden Material verfüllt, so können der erste Anker und die Ventilhülse nichtmehr oder nur unter großem Aufwand wieder getrennt werden.

In einer Ausführungsform, in der der erste Anker und die Ventilhülse mit komplementären Gewinden verbunden werden, kann die Auflagefläche auslassseitig von dem Gewinde der Ventilhülse angeordnet sein. Es ist jedoch auch möglich, dass die Auflagefläche beispielsweise im Gewinde angeordnet ist. Beim Einschrauben des ersten Ankers in die Ventilhülse kann so das Dichtungselement eingespannt werden. Dies hat den Vorteil, dass je nach Ausführung des Dichtungselements die Kompression dieses Dichtungselements angepasst werden kann. Es ist Vorteilhaft die Kompression an das Dichtungselement anzupassen, um einen vollständig abdichtenden Sitz des Dichtungselements zu gewährleisten. Zudem darf das Dichtungselement nicht zu stark belastet werden. Eine zu starke Belastung des Dichtungselements kann dazu führen, dass das Material reißt oder spröde wird. Sitzt das Dichtungselement nicht richtig und/oder wird es spröde und/oder bilden sich Risse, kann das Fluid in den Spalt eindringen, was aus oben genannten Gründen unter allen Umständen zu vermeiden ist.

Ein Abschnitt des ersten Ankers kann in einen ihm zugewandten Abschnitt der Ventilhülse eingreifen. Der in die Ventilhülse eingreifende Abschnitt des ersten Ankers kann vorzugsweise verjüngt sein. Dadurch kann der an den in die Ventilhülse eingreifenden Abschnitt des ersten Ankers angrenzende Abschnitt des ersten Ankers einen axialen Anschlag ausbildet. Der Anschlag kann an einer ankerseitigen Stirnfläche der Ventilhülse (bezogen auf den ersten Anker) anliegen. Der erste Anker kann einen einlassseitigen (dem zweiten Anker abgewandten) Abschnitt, mit einem ersten Durchmesser, einen mittleren Abschnitt mit einem zweiten Durchmesser und einen ventilhülsenseitigen Abschnitt mit einem dritten Durchmesser aufweisen. Der Durchmesser des ersten Ankers entspricht hierbei dem Abstand zwischen den Schnittpunkten einer orthogonal durch die Längsachse verlaufenden Geraden mit der Mantelfläche des ersten Ankers. Der Durchmesser des mittleren Abschnitts kann größer sein als der Durchmesser des ventilhülsenseitigen Abschnitts des ersten Ankers. Der Durchmesser des einlassseitigen Abschnitts des ersten Ankers kann kleiner oder gleich dem Durchmesser des mittleren Abschnitts sein. Vorzugsweise ist der Durchmesser des hülsenseitigen und einlassseitigen Abschnitts kann in etwa gleich groß sein. Am Übergang des mittleren Abschnitts zum ventilhülsenseitigen Abschnitt des ersten Ankers kann sich durch die unterschiedlichen Durchmesser eine sich in radialer Richtung erstreckende Schulter ausbilden. Die Schulter kann zur Begrenzung der axialen Bewegung des ersten Ankers entlang der Längsachse dienen. Die Schulter kann beispielsweise eine umlaufende Schulter sein und einen Axialanschlag, z.B. für die ankerseitige Stirnfläche der Ventilhülse ausbilden.

Die Ventilhülse kann eine zur Schulter komplementäre Anschlagsfläche haben. Die komplementäre Anschlagsfläche kann eine ankerseitige Stirnfläche der Ventilhülse sein. Die ankerseitige Stirnfläche der Ventilhülse kann einer einlassseitigen Stirnfläche der Ventilhülse entsprechen. Die ankerseitige Stirnfläche der Ventilhülse kann beispielsweise ein Anschlag sein. Die ankerseitige Stirnfläche der Ventilhülse kann einer dem Ventilsitz abgewandten Stirnfläche der Ventilhülse entsprechen. Wie üblich wird unter einem Anschlag ein Widerlager verstanden, dass eine Bewegung begrenzt. Durch den Anschlag wird hier der Endpunkt der axialen Bewegung der Ventilhülse relativ zum ersten Anker beim Einschieben des ventilhülsenseitigen Abschnitts des ersten Ankers in die Ventilhülse festgelegt. Die auslassseitige Fläche der Schulter kann an der ankerseitigen Stirnfläche der Ventilhülse anschlagen. Die auslassseitige Stirnfläche der Schulter kann zusammen mit der ankerseitigen Stirnfläche der Ventilhülse die Hälfte eines Formschlusses bilden, d. h. der erste Anker, der anschlagende Körper, kann die Ventilhülse, den Anschlag, in Gegenrichtung wieder verlassen. Natürlich kann auch die Ventilhülse als anschlagender Körper und der erste Anker als Anschlag definiert werden.

Vorzugsweise kann der Anschlag die Bewegung der auslassseitigen Stirnfläche des ersten Ankers in Richtung der Auflagefläche begrenzen. Dadurch kann die Kompression des, zwischen der auslassseitigen Stirnfläche und der Auflagefläche eingespannten, Dichtungselements in Richtung der Längsachse definiert werden. Ein übermäßige zu einer Rissbildung führende Kompression des Dichtungselements zwischen der Auflagefläche und ventilhülsenseitigen Stirnfläche des ersten Ankers kann somit verhindert werden. Anders formuliert, kann dadurch das Dichtungselement nicht zu stark belastet werden und/oder das Einreißen oder spröde werden des Dichtungselements wird vermieden. Eine fehlerfreie Montage wird entsprechend vereinfacht.

Das Sackloch kann beispielsweise eine axial gestufte Bohrung sein. Das Sackloch kann einen ersten einlassseitigen Abschnitt mit einem ersten Durchmesser und einen sich auslassseitig daran anschließenden zweiten Abschnitt haben, der einen zweiten Durchmesser hat. Der erste Abschnitt und der zweite Abschnitt können unterschiedliche Durchmesser haben. Bevorzugt ist der erste Durchmesser größer als der zweite Durchmesser. Dadurch wird am Übergang vom größeren ersten Durchmesser zu dem kleineren zweiten Durchmesser eine Widerlagerfläche ausgebildet. Bevorzugt stütz sich das elastische Vorspannelements auslassseitig an der Widerlagerfläche ab. Einlassseitig kann das Vorspannelement vorzugsweise an der auslassseitigen Stirnfläche des ersten Ankers anliegen, so dass das Vorspannelement den zweiten Anker in Richtung des Ventilauslasses vorspannt. Alternativ oder zusätzlich kann der Aktuator am zweiten Anker angeordnet sein. Der Aktuator kann an der Außenfläche des zweiten Ankers, im ersten Abschnitt oder im zweiten Abschnitt des zweiten Ankers angeordnet sein. Der Aktuator kann zudem innerhalb des zweiten Ankers, im ersten Abschnitt oder im zweiten Abschnitt des zweiten Ankers und an der Innenwandung des zweiten Ankers angeordnet sein.

Das elastische Vorspannelement und/oder der Aktuator sitzt vorzugsweise zwischen dem ersten und dem zweiten Anker. Das Vorspannelement und/oder der Aktuator kann auf der dem zweiten Anker abgewandten Seite zumindest mittelbar an dem Ventilgehäuse anliegen, d.h. eine axiale Verschiebung des Vorspannelementes in Richtung des ersten Ankers kann durch diesen blockiert oder ein anderes mit dem Ventilgehäuse verbundenes Widerlager unterbunden werden. Die dem ersten Anker abgewandte Seite des Vorspannelements und/oder des Aktuators liegt vorzugsweise an der dem ersten Anker zugewandten Stirnfläche des zweiten Ankers an. Dadurch übt das Vorspannelement und/oder der Aktuator eine von dem ersten Anker axial wegweisende Kraft auf den zweiten Anker aus.

Das Magnetventil kann zudem ein einlassseitiges an den ersten Anker befestigtes Fitting haben. Das Fitting kann mit dem ersten Anker durch Kraftschluss, Formschluss oder Stoffschluss verbunden werden. Das Fitting kann mit dem ersten Anker beispielsweise durch Verschrauben, Löten und Schweißen verbunden werden. Natürlich können das Fitting und der erste Anker auch einstückig ausgebildet sein. Das Fitting kann einen Flansch, einen Durchlass, eine ankerseitige Stirnfläche und eine dem Anker abgewandte Stirnfläche haben. Das Fitting kann eine ankerseitige Stirnfläche mit einem Durchlass haben. Der Durchlass kann koaxial zur Längsachse des Ventilgehäuses sein.

Das Fluid kann durch den Durchlass des Fittings, auch Fittingkanal genannt, in den Einlass des Ventilgehäuses strömen. Der Fittingkanal hat eine den Kanal in radialer Richtung begrenzende Fittingkanalwandung. Der Fittingkanal kann in der ankerseitigen Stirnfläche des Fittings münden. Der Fittingkanal kann koaxial zur Längsachse des Ventilgehäuses sein. Vorzugsweise kann der Fittingkanal koaxial zum Durchgangskanal sein.

Sind der erste Anker und das Fitting nicht einstückig ausgebildet, kann sich ein einlassseitiger Spalt, mit einer durchgangskanalseitigen Spaltöffnung, zwischen der ankerseitigen Stirnfläche des Fittings und der einlassseitigen Stirnfläche des ersten Ankers ausbilden. Der Spalt kann in axialer Richtung durch das Fitting und den ersten Anker begrenzt sein. Der Spalt zwischen dem ersten Anker und dem Fitting wird nachfolgend nur zur sprachlichen Abgrenzung gegenüber dem zwischen dem ersten Anker und der Ventilhülse befindenden Spalt als "Zwischenraum" bezeichnet.

Der durch den Zwischenraum verursachte Totraum wird vorzugsweise gegenüber des Fluids vollkommen abgedichtet werden, z.B. um insbesondere krankheitserregende Keime und Fäulnisprodukte zu vermeiden.

Der Zwischenraum kann eine Zwischenraumöffnung haben. Die Zwischenraumöffnung kann zwischen der Fittingkanalwandung und der Durchgangskanalwandung angeordnet sein. Beispielsweise kann die Zwischenraumöffnung in einen Übergangsbereich vom Fittingkanal zum Durchgangskanal münden. In anderen Worten, die Zwischenraumöffnung kann zwischen dem Übergangsbereich der Fittingkanalwandung zur ankerseitigen Stirnfläche des Fittings und dem Übergang der Durchgangskanalwandung zur einlassseitigen Stirnfläche des ersten Ankers angeordnet sein.

Ein Dichtungselement kann zwischen dem Fitting und dem ersten Anker angeordnet sein. Das zwischen dem Fitting und dem ersten Anker angeordnete Dichtungselement wird nachfolgend nur zur sprachlichen Abgrenzung gegenüber dem den Hohlraum abdichtenden Dichtungselement als "Zwischenraumabdichtung" bezeichnet. Vorzugsweise kann die Zwischenraumabdichtung in der Zwischenraumöffnung angeordnet, bevorzugt eingespannt sein.

Die Zwischenraumabdichtung kann am Übergang der Durchgangskanalwandung zur einlassseitigen Stirnfläche des ersten Ankers angeordnet sein. Alternativ oder zusätzlich kann die Zwischenraumabdichtung am Übergang der Fittingkanalwandung zur ankerseitigen Stirnfläche des Fittings angeordnet sein.

Der erste Anker kann beispielsweise in seiner einlassseitigen Stirnfläche eine Ringnut haben. Die Ringnut kann eine durchgangskanalseitige, dem Durchgangskanal abgewandte und eine einlassseitige Fläche haben. Die Ringnut kann koaxial zur Längsachse sein. Bevorzugt kann die durchgangskanalseitige Fläche der Ringnut koaxial zur Fittingkanalwandung sein. Die Zwischenraumabdichtung kann, wenigstens teilweise, in der Ringnut angeordnet sein. Vorzugsweise kann die Zwischenraumabdichtung in der Ringnut angeordnet und zwischen dem ersten Anker und dem Fitting eingespannt sein.

Durch die Ringnut kann die Zwischenraumabdichtung einfach positioniert und eine fehlerfreie Montage wird entsprechend vereinfacht.

Im montierten Zustand kann die ankerseitige Stirnfläche des Fittings und/oder die einlassseitigen Stirnfläche des ersten Ankers auf die Zwischenraumabdichtung eine Kraft in Richtung des ersten Ankers und/oder des Fittings ausüben. So kann die Zwischenraumabdichtung zwischen dem ersten Anker und dem Fitting eingespannt werden. Infolgedessen wird der Zwischenraum vollständig gegenüber dem strömenden Fluid abgedichtet.

Die Zwischenraumabdichtung kann ein elastischer Dichtring, beispielsweise ein O-Ring sein. Wie bekannt, kann ein O-Ring einen kreisförmigen, einen ellipsoiden oder einen rechteckigen Querschnitt aufweisen. Jede andere Form einer Zwischenraumabdichtung ist jedoch auch denkbar.

Die Zwischenraumabdichtung kann beispielsweise ein flächig ausgebildeter Dichtring sein. Die Zwischenraumabdichtung kann zwischen der ankerseitigen Stirnfläche des Fittings und der einlassseitigen Stirnfläche des ersten Ankers angeordnet sein. Der flächig ausgebildete Dichtring kann den Zwischenraum komplett Ausfüllen und somit die durchgangskanalseitige Zwischenraumöffnung vollständig abdichten.

Durch die (wenigstens eine) Zwischenraumabdichtung wird zuverlässig verhindert, dass sich Fluidreste oder Schwebeteilchen in dem Zwischenraum ansammeln.

Anders formuliert, bildet der durch bei der Montage des Fittings am ersten Anker ausgebildete Zwischenraum einen Totraum in dem Magnetventil, der vorzugsweise durch die Zwischenraumabdichtung vollständig vom Fluidstrom getrennt wird.

Auch hier ist die vollständige Abdichtung des Zwischenraums, bzw. der durchgangskanalseitigen Zwischenraumöffnung, gegenüber dem strömenden Fluid notwendig, um zu verhindern, dass sich Schwebepartikel in dem Zwischenraum agglomerieren. Die Gefahr des Ansiedelns krankheitserregender Keime oder von Fäulnisprodukten ist bei dem einlassseitigen Zwischenraum ebenfalls besonders groß, da der einlassseitige Zwischenraum zum einen besonders anfällig für die Ablagerung von Schwebstoffen und andererseits werden die im Zwischenraum Abgelagerten Schwebstoffe nicht ausgespült.

Ein Magnet, beispielsweise ein Elektromagnet, kann auf dem Spulensitz angeordnet sein.

Der Magnet kann zusammen mit Polblechen auf das Ventilgehäuse und den ersten Anker koaxial aufschiebbar sein. Dies kann eine einfache Montage des Magneten ermöglichen. Zudem kann der Magnet, wenn das Magnetventil von einem kalten Fluid durchströmt wird, gekühlt werden.

Der Magnet kann auf dem Ventilgehäuse gegen unbeabsichtigtes axiales Verschieben gesichert sein. Die Ventilhülse kann auslassseitig einen Flansch haben, an dem sich der Magnet abstützt. Einlassseitig kann der Magnet entweder durch eine Mutter oder einen weiteren Flansch fixiert sein. Bevorzugt hat das Ventilgehäuse einen Flansch mit Schlüsselflächen und der erste Anker ein Außengewinde, auf das das Fitting aufschraubbar ist. So lässt sich zum Abschluss der Montage des Ventils der Magnet auf das Ventilgehäuse bis zum Anschlag am Flansch des Ventilgehäuses aufschieben und mit dem Fitting gegen Verrutschen sichern.

Vorzugsweise können die Ventilhülse und der erste Anker jeweils auf der dem Elektromagneten abgewandten Seite ein Innen- und/oder ein Außengewinde, auf das handelsübliche Anschlussstücke aufgeschraubt werden können, haben. Ist die Mantelfläche des ersten Ankers und/oder die Außenwandung des Ventilgehäuses an seinem dem Magneten abgewandtem Ende jeweils verjüngt, so kann dort ein Dichtring aufgeschoben werden, der von dem Gewinde eines Anschlussstückes, beispielsweise dem zuvor genannten Fitting übergriffen wird.

Die Ventilhülse, die beiden Anker und das Fitting können sämtlich als Drehteile herstellbar sein, d.h. die Ventilgehäuse müssen nicht mehr gegossen oder geschmiedet werden. Das vereinfacht die Fertigung und erhöht die Flexibilität gegenüber Kundenwünschen.

Das Magnetventil kann sowohl ein Gleichstrom (DC) - als auch ein Wechselstrom (AC)-Ventil sein. Bei einem AC-Ventil werden zusätzliche Phasenverschiebungsringe in den ersten Anker eingepresst, welche bei einem DC-Ventil fehlen. Durch den fehlenden Phasenverschiebungsring hat ein DC-Ventil daher den Vorteil, dass höhere hygienische Standards bei aggressiven Medien gewährleistet werden können.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Figur 1: zeigt eine Übersicht einer Ausführungsform eines geschnittenen erfindungsgemäßen Magnetventils
- Figur 2: zeigt eine Ausführungsform eines geschnittenen erfindungsgemäßen Magnetventils
- Figur 3: zeigt eine Detailansicht eines Querschnitts des erfindungsgemäßen Magnetventils

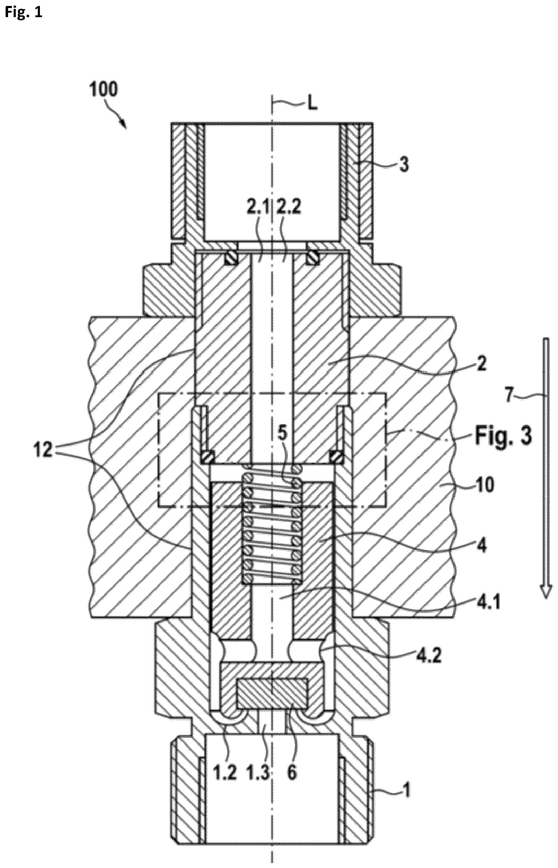

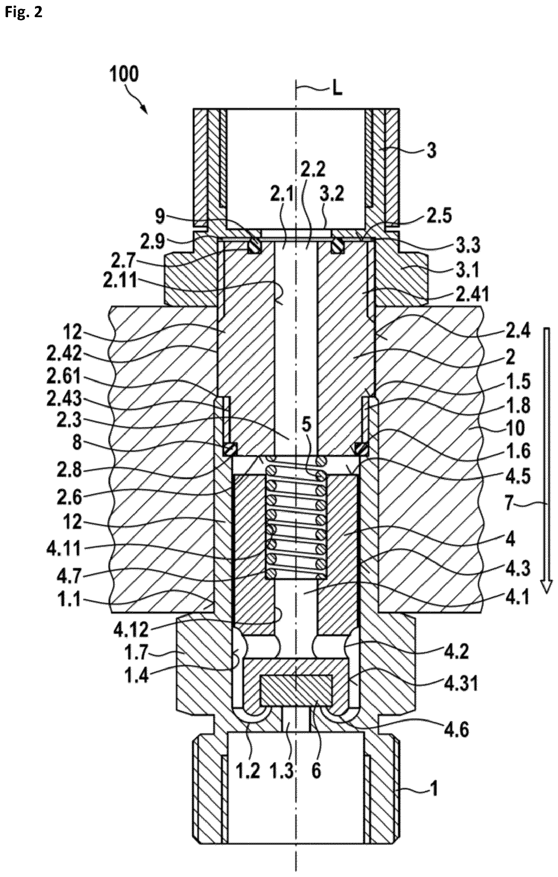

Fig. 1 und Fig.2 zeigen ein stromlos geschlossenes Magnetventil 100 im Schnitt. Der Pfeil 7 gibt die Vorzugströmungsrichtung 7 an. Diese wird nachfolgend als Strömungsrichtung 7 bezeichnet. Die Begriffe Einlass, Auslass, einlassseitig und auslassseitig beziehen sich auf diese Strömungsrichtung.

Das Magnetventil hat ein Ventilgehäuse 12 mit einer Längsachse L. Das Ventilgehäuse 12 hat eine Ventilhülse 1 und einen einlassseitig an der Ventilhülse montierten magnetischen, beispielsweise ferromagnetischen, ersten Anker 2. Die Ventilhülse 1 und der erste Anker 2 können koaxial zur Längsachse L sein. Der erste Anker 2 kann beispielsweise mit der Ventilhülse 1 verschraubt werden. Die Ventilhülse 1 und der erste Anker 2 können aber auch einstückig ausgebildet sein. Beispielsweise können der erste Anker 2 und die Ventilhülse 1 durch ein Gewinde verbunden sein. Der erste Anker 1 und die Ventilhülse 2 können aber auch verklebt oder verschweißt werden.

Die Ventilhülse kann eine Außenwandung 1.1, einen Ventilsitz 1.2, eine Durchlassöffnung 1.3, eine Innenwandung 1.4, eine ankerseitige Stirnfläche 1.5, eine Auflagefläche 1.6 und einen Flansch 1.7 haben. Die ankerseitige Stirnfläche 1.5 kann bei einem stromlosgeschlossenen Magnetventil der einlassseitigen Stirnfläche der Ventilhülse entsprechen. Die Durchlassöffnung 1.3 kann die Auslassöffnung des Magnetventils 100 sein. Die Durchlassöffnung kann in der Mitte des Ventilsitzes 1.2 angeordnet sein.

Die Ventilhülse 1 kann einlassseitig einen Bereich aufweisen, der einen größeren Innendurchmesser als der angrenzende auslassseitige Bereich hat. Bedingt durch die Unterschiedlichen Innendurchmesser kann die Ventilhülse eine Auflagefläche 1.6 haben. Die Innenwandung der Ventilhülse 1.4 kann einlassseitig eine ringförmige Ausnehmung haben, die eine Auflagefläche 1.6 ausbildet.

Der erste Anker 2 kann einen Durchgangskanal 2.1 haben. Der Durchgangskanal 2.1 kann die einlassseitige Stirnfläche 2.5 mit der auslassseitigen Stirnfläche 2.6 verbinden. Der Durchgangskanal 2.1 kann eine Kanalwandung 2.11, eine erste Öffnung 2.2 in der einlassseitigen Stirnfläche 2.5 und eine zweite Öffnung 2.3 in der auslassseitigen Stirnfläche 2.6 haben. Die erste Öffnung kann die Einlassöffnung 2.2 und die zweite Öffnung kann die auslassseitige Öffnung 2.3 des Durchgangskanals 2.1 sein. Die Öffnungen 2.2, 2.3 können koaxial zur Längsachse L sein. Zudem kann der erste Anker 2 eine Mantelfläche 2.4 haben. Der erste Anker 2 kann eine einlassseitige Ringnut 2.7 in der einlassseitigen Stirnfläche 2.5 und/oder eine auslassseitige Ringnut 2.8 in der auslassseitigen Stirnfläche 2.6. haben. Alternativ kann der erste Anker 2 keine einlassseitige Ringnut 2.7 in der einlassseitigen Stirnfläche 2.5 und/oder keine auslassseitige Ringnut 2.8 in der auslassseitigen Stirnfläche 2.6. haben.

Der erste Anker 2 kann einen einlassseitigen Abschnitt 2.41, mit einem ersten Durchmesser, einen mittleren Abschnitt 2.42 mit einem zweiten Durchmesser und einen auslassseitigen Abschnitt mit einem dritten Durchmesser 2.43 haben. Der Durchmesser des mittleren Abschnitts 2.42 kann größer sein als der Durchmesser des einlassseitigen Abschnitts 2.41 und des auslassseitigen Abschnitts 2.43. Der Durchmesser des auslassseitigen Abschnitts 2.43 und einlassseitigen Abschnitts 2.41 kann in etwa gleich groß sein. Am Übergang des mittleren Abschnitts 2.42 zum auslassseitigen Abschnitt 2.43 des ersten Ankers 2 kann sich durch die unterschiedlichen Durchmesser eine Schulter 2.61 ausbilden.

Die Schulter 2.61 kann zur Begrenzung der axialen Bewegung des ersten Ankers 2 entlang der Längsachse L dienen. Die Schulter 2.61 kann eine umlaufende Schulter sein.

Die ankerseitige Stirnfläche 1.5 der Ventilhülse 1 kann eine zur Schulter 2.61 komplementäre Fläche sein. Die ankerseitige Stirnfläche der Ventilhülse 1.5 kann ein Anschlag sein für die Schulter 2.61 sein. Natürlich kann auch die Schulter 2.61 als Anschlag für die ankerseitige Stirnfläche 1.5 der Ventilhülse 1 definiert werden.

Die auslassseitige Stirnfläche 2.6 des ersten Ankers 2 und die einlassseitige Stirnfläche 4.5 des zweiten Ankers 2 begrenzen einen von der Innenwandung der Ventilhülse 1.4 umschlossenen Hohlraum in axialer Richtung. Der Hohlraum kann mit dem Durchgangskanal 2.1 und dem Sackloch 4.1 kommunizieren und von dem Fluid durchströmt werden.

Zwischen der Ventilhülse 1 und dem ersten Anker 2 kann ein Spalt 1.8 ausgebildet sein. Der Spalt 1.8 kann in einem Bereich ausgebildet werden, in dem ein Abschnitt der Mantelfläche des ersten Ankers 2.4 einlassseitig in die Ventilhülse 1 eingreift. Der Spalt 1.8 kann sich zwischen der Mantelfläche des ersten Ankers 2.4 und der Innenwänden der Ventilhülse 1.4 befinden.

Ein Dichtungselement 8 kann zwischen der Ventilhülse 1 und dem ersten Anker 1 angeordnet sein. Das Dichtungselement 8 kann zwischen der auslassseitigen Stirnfläche 2.6 des ersten Ankers und der Auflagefläche 1.6 der Ventilhülse 1 eingespannt werden. Das Dichtungselement 8 kann zudem zwischen der auslassseitigen Stirnfläche 2.6 des ersten Ankers und der Auflagefläche 1.6 der Ventilhülse 1 in einer auslassseitigen Ringnut 2.8 eingespannt sein. Alternativ kann der erste Anker 2 keine auslassseitige Ringnut 2.8 aufweisen. Das Dichtungselement 8 kann zwischen der auslassseitigen Stirnfläche 2.6 des ersten Ankers und der Auflagefläche 1.6 der Ventilhülse 1 eingespannt sein.

Der durch den Spalt 1.8 gebildete Totraum im Magnetventil 100 kann durch das Dichtungselement 8 vollständig vom Hohlraum getrennt werden.

Der von der ankerseitigen Stirnfläche der Ventilhülse 1.5 ausgebildete Anschlag kann die Bewegung der auslassseitigen Stirnfläche 2.6 des ersten Ankers 2 in Richtung der Auflagefläche 1.6 begrenzen. Als Folge kann die Kompression des, zwischen der auslassseitigen Stirnfläche 2.6 und der Auflagefläche 1.6 eingespannten, Dichtungselements 8 in Richtung der Längsachse L limitiert werden. Ein zweiter Anker 4 kann in der Ventilhülse 1 beweglich angeordnet sein. Der zweite Anker 4 kann parallel zur Längsachse L beweglich sein. Der zweite Anker 4 kann eine dem Ventilsitz 1.2 abgewandte Stirnfläche 4.5 und eine dem Ventilsitz zugewandte Seite 4.6 haben. Die dem Ventilsitz abgewandte Stirnfläche 4.5 kann der einlassseitigen Stirnfläche des zweiten Ankers 4 entsprechen. Die dem Ventilsitz zugewandte Stirnfläche 4.6 kann der auslassseitigen Stirnfläche des zweiten Ankers 4 entsprechen. In der in Fig.1 und Fig.2 beispielhaft dargestellten Ausführungsform entspricht die dem Ventilsitz abgewandte Stirnfläche 4.5 der einlassseitigen Stirnfläche und die dem Ventilsitz zugewandte Stirnfläche 4.6 der der auslassseitigen Stirnfläche des zweiten Ankers 4. Daher wird im Folgenden der Begriff einlassseitigen Stirnfläche 4.5 und auslassseitige Stirnfläche 4.6 für die genannten Flächen verwendet.

Der zweite Anker kann ein Sackloch 4.1 haben. Das Sackloch 4.1 kann gebohrt oder gefräst sein. Beispielsweise ist das Sackloch 4.1 eine axiale Bohrung. Das Sackloch 4.1 kann einen ersten Abschnitt 4.11 und einen zweiten Abschnitt 4.12 haben. Der erste Abschnitt 4.11 und der zweite Abschnitt 4.12 können unterschiedliche Durchmesser haben. In der dargestellten Ausführungsform kann der erster Abschnitt 4.11 einen größeren Durchmesser als der zweiter Abschnitt 4.12 haben. Der erste Abschnitt 4.11 kann der einlassseitige Abschnitt sein und der zweite Abschnitt 4.12 kann der auslassseitige Abschnitt des Sacklochs 4.1 sein. Natürlich ist eine umgekehrte Anordnung ebenfalls möglich. Am Übergang vom ersten Abschnitt 4.11 zum zweiten Abschnitt 4.11 kann eine Auflagefläche 4.7 ausgebildet sein.

Der zweite Anker 4 kann eine Außenfläche 4.3 haben. Die Außenfläche 4.3 des zweiten Ankers 4 und die Innenwandung 1.4 der Ventilhülse können ein Gleitlager ausbilden. Der zweite Anker 4 kann in der Ventilhülse entlang der Längsachse L geführt werden.

Der zweite Anker 4.kann durch ein elastisches Vorspannelement 5 in Richtung der Auslassöffnung vorgespannt sein. Das elastische Vorspannelement kann eine Feder, beispielsweise eine Schraubenfeder, sein. Das elastische Vorspannelement 5 kann ventilsitzseitig an der Auflagefläche 4.7 des Sacklochs 4.1 aufliegen. Das dem ventilsitz abgewandte Ende des elastischen Vorspannelements 5 kann an der auslassseitigen Stirnfläche 2.6 des ersten Ankers aufliegen. Das elastische Vorspannelement 5 kann den zweiten Anker 4 in Richtung des Ventilsitzes 1.2 Vorspannen. Der zweite Anker 4 kann in der Geschlossenstellung mit einer Ventilsitzdichtung 6 an dem Ventilsitz 1.2 dichtend anliegen und den Ventilsitz 1.2 in seiner Offenstellung die Durchlassöffnung 1.3 des Ventilsitzes 1.2 frei.

Die Außenfläche 4.3 des zweiten Ankers 4 kann in den dem Ventilsitz 1.2 zugewandten Bereich verjüngt sein und eine verjüngte Außenfläche 4.31 haben. Zwischen der Innenwandung der Ventilhülse 1.4 und der verjüngten Außenfläche 4.31 des zweiten Ankers 4 kann ein Freiraum ausbildet sein.

Die Außenfläche 4.3, bevorzugt die verjüngte Außenfläche 4.31, kann mit dem Sackloch 4.1 durch wenigstens eine Fluidleitung 4.2 verbunden sein. Die Sackloch 4.1 kann mit dem zwischen der Außenfläche 4.3, bzw. der verjüngten Außenfläche 4.31, und der Innenwandung der Ventilhülse 1.4 gebildeten Freiraum über die wenigstens eine Fluidleitung 4.2 kommunizieren.

Einlassseitig kann auf dem ersten Anker 2 ein Fitting 3 aufgesetzt werden. Beispielsweise können der erste Anker 2 und das Fitting 3 durch komplementäre Gewinde verbunden werden. Der erste Anker 2 und das Fitting 3 können aber auch einstückig ausgeführt sein oder verklebt werden. Beispielsweise hat der erste Anker 2 ein Außengewinde, auf das ein Fitting 3 aufgeschraubt werden kann. Das Fitting kann einen Flansch 3.1, einen Durchlass 3.2 und eine ankerseitige Stirnfläche 3.3 haben. Zwischen der ankerseitigen Stirnfläche 3.3 und der einlassseitigen Stirnfläche 2.5 des ersten Ankers kann ein Zwischenraum 2.9 sein.

Eine Zwischenraumabdichtung 9 kann zwischen der ankerseitigen Stirnfläche 3.3 des Fittings 3 und der einlassseitigen Stirnfläche 2. 5 des ersten Ankers 2 angeordnet, beispielsweise eingespannt sein.

Die Zwischenraumabdichtung 9 kann ein elastischer Dichtring, beispielsweise ein O-Ring sein. Wie bekannt, kann ein O-Ring einen kreisförmigen, einen ellipsoiden oder einen rechteckigen Querschnitt aufweisen. Jede andere Form einer Zwischenraumabdichtung 9 ist jedoch auch denkbar. Die Zwischenraumabdichtung 9 kann beispielsweise ein flächig ausgebildeter Dichtring sein. Die Zwischenraumabdichtung 9 kann zwischen der ankerseitigen Stirnfläche 3.3 des Fittings 3 und der einlassseitigen Stirnfläche 2.5 des ersten Ankers 2 angeordnet sein und den Zwischenraum 2.9 komplett ausfüllen. Wie in Fig.1 und Fig.2 abgebildet, kann die Zwischenraumabdichtung 9 in einer einlassseitigen Ringnut 2.7 des ersten Ankers 2 angeordnet sein. Die Zwischenraumabdichtung 9 kann demnach zwischen dem ersten Anker 2 und dem Fitting 3 eingespannt sein und den Zwischenraum 2.9 gegenüber dem strömenden Fluid vollständig abdichten.

Eine vollständige Abdichtung des Zwischenraums 2.9 ist notwendig, um zu verhindern, dass sich Schwebepartikel in dem Zwischenraum 2.9 agglomerieren. Die Gefahr des Ansiedelns krankheitserregender Keime oder von Fäulnisprodukten ist bei dem einlassseitigen Zwischenraum 2.9 ebenfalls besonders groß, da der einlassseitige Zwischenraum 2.9 zum einen besonders anfällig für die Ablagerung von Schwebstoffen und andererseits werden die im Zwischenraum 2.9 abgelagerten Schwebstoffe nicht ausgespült.

Zwischen einem Flansch 3.1 des Fittings 3 und einem Flansch 1.7 des Ventilgehäuses 12 kann eine auf einem Spulensitz angeordnete Spule eines auf die Ventilhülse 1 und den ersten Anker 2 aufgeschobenen Elektromagneten 10 angeordnet sein. Zum Öffnen des Ventils wird mittels des Elektromagneten 10 eine der Strömungsrichtung entgegengesetzte Kraft auf einen axial beweglichen, ebenfalls magnetischen zweiten Anker 4 ausgeübt.

Durch die Kraft der Schraubenfeder 5 kann- bei ausgeschaltetem Elektromagneten 10 - der zweite Anker 4 gegen ein Ventilsitz 1.2 am auslassseitigen Ende der Ventilhülse 1 verspannt werden.

Wird der Elektromagnet 10 erregt, so kann der zweite Anker 4 samt der Ventilsitzdichtung 6 gegen die Kraft der Schraubenfeder 5 in Richtung des Einlasses bewegt werden, wodurch der Durchlass 1.3 im Ventilsitz 1.2 freigegeben wird. Das zu steuernde Fluid - eine Flüssigkeit oder auch ein Gas - kann nun durch den, den Einlass bildenden Fitting 3 und einen Durchgangskanal 2.1 im ersten Anker 3 in die Ventilhülse 1 strömen. Von dort strömt das Fluid in das Sackloch 4.1 des zweiten Ankers 4. Das Sackloch 4.1 des zweiten Ankers 4 ist durch zwei Ausnehmungen 4.2 mit der verjüngten Außenfläche 4.3 des zweiten Ankers 4 verbunden. Das Fluid strömt entlang der Strömungsrichtung durch die Ausnehmungen 4.2 in einen Freiraum zwischen der Innenwandung der Ventilhülse 1.4 und der verjüngten Außenfläche 4.3 des zweiten Ankers 4, von wo es zum Ventilsitz 1.2 und zu dem den Auslass des Ventilgehäuses 12 bildenden Durchlass 1.3 gelangt.

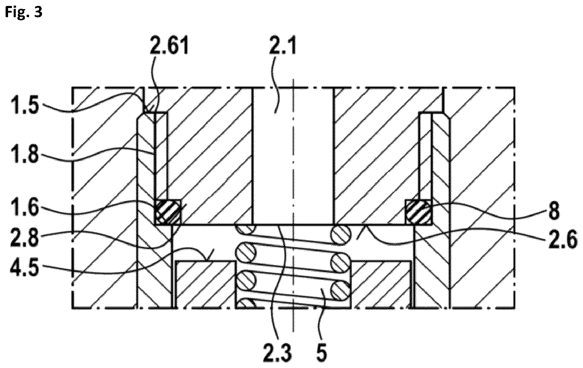

Figur 3 zeigt eine Detailansicht eines Querschnitts des erfindungsgemäßen Magnetventils.

Die auslassseitige Schulter 2.61 des ersten Ankers 2 kann an der ankerseitigen Stirnfläche 1.5 der Ventilhülse 1 anliegen. Die ankerseitige Stirnfläche 1.5 kann einen Anschlag für die Schulter 2.61 bilden und die Bewegung des ersten Ankers 2 in Richtung des Auslasses begrenzen. Durch die Begrenzung der Bewegung des ersten Ankers 2 entlang der Längsachse L und in Richtung das Auslasses kann die Kompression des Dichtungselements 8 kontrolliert werden. Das Dichtungselement 8 kann zwischen der Auflagefläche 1.6 der Ventilhülse 1 und der auslassseitigen Stirnfläche 2.6 des ersten Ankers 2 eingespannt werden. Das Dichtungselement 8 kann in einer auslassseitigen Ringnut 2.8 des ersten Ankers 2 angeordnet sein und zwischen dem ersten Anker 2, der Innenwandung der Ventilhülse 1.4 und der Auflagefläche 1.6 eingespannt sein. Der erste Anker 2 kann alternativ keine auslassseitige Ringnut 2.8 aufweisen. Das Dichtungselement 8 kann dann z.B. zwischen der der auslassseitigen Stirnfläche 2.6 des ersten Ankers 2 und der Ventilhülse 1 eingespannt sein.

Die auslassseitige Stirnfläche 2.6 des ersten Ankers 2 und die einlassseitige Stirnfläche 4.5 des zweiten Ankers 4 begrenzen einen von der Innenwandung der Ventilhülse 1.4 umschlossenen Hohlraum in axialer Richtung. Der Hohlraum kann mit dem Durchgangskanal 2.1 und dem Sackloch 4.1 kommunizieren und von dem Fluid durchströmt werden. Das Dichtungselement 8 kann den Spalt 1.9 vollständig vom Hohlraum und somit vom strömenden Fluid trennen.

### Bezugszeichenliste

- 1: Ventilhülse
- 1.1: Außenwandung der Ventilhülse
- 1.2: Ventilsitz
- 1.3: Auslassöffnung
- 1.4: Innenwandung der Ventilhülse
- 1.5: ankerseitige Stirnfläche / einlassseitige Stirnfläche der Ventilhülse / dem ersten Anker 2 zugewandte Stirnfläche
- 1.6: Auflagefläche
- 1.7: Flansch
- 1.8: Spalt
- 2: erster Anker
- 2.1: Durchgangskanal
- 2.11: Kanalwandung
- 2.2: Einlassöffnung
- 2.3: Auslassseitige Öffnung
- 2.4: Mantelfläche des ersten Ankers
- 2.41: einlassseitiger Abschnitt
- 2.42: mittleren Abschnitt
- 2.43: auslassseitiger Abschnitts
- 2.5: einlassseitige Stirnfläche des ersten Ankers
- 2.6: auslassseitige Stirnfläche des ersten Ankers
- 2.61: Schulter
- 2.7: einlassseitige Ringnut
- 2.8: auslassseitige Ringnut
- 2.9: Zwischenraum
- 3: Fitting
- 3.1: Flansch des Fittings
- 3.2: Fittingkanal
- 3.3: ankerseitige Stirnfläche
- 4: zweiter Anker
- 4.1: Sackloch
- 4.11: erster Abschnitt
- 4.12: zweiter Abschnitt
- 4.2: Fluidleitung
- 4.3: Außenfläche des zweiten Ankers
- 4.31: verjüngte Außenfläche des zweiten Ankers
- 4.5: Ventilsitz abgewandte Stirnfläche / einlassseitige Stirnfläche
- 4.6: Ventilsitz zugewandte Seite / auslassseitige Stirnfläche
- 4.7: Auflagefläche
- 5: elastisches Vorspannelement
- 6: Ventilsitzdichtung / Durchlassdichtung
- 7: Vorzugsströmungsrichtung
- 8: Dichtungselement
- 9: Zwischenraumabdichtung
- 10: Elektromagnet
- 12: Ventilgehäuse
- L: Längsachse
- 100: Magnetventil

## Patentansprüche

1. Magnetventil (100) mit einem Ventilgehäuse (12) aus einer Ventilhülse (1) und einem ersten magnetischen Anker (2), die eine gemeinsame Längsachse (L) haben,
und mit einem zweiter magnetischen Anker (4) der zwischen einer Offenstellung und einer Geschlossenstellung parallel zu der Längsachse in dem Ventilgehäuse verschiebbar gelagert ist, wobei
- der erste Anker (2) zwei Stirnflächen und einen die Stirnflächen entlang der Längsachse (L) verbindenden Durchgangskanal (2.1) mit einer Einlassöffnung (2.2) des Ventilgehäuses (12) hat,
- die Ventilhülse (1) auf der der Einlassöffnung (2.2) abgewandten Seite des Ventilgehäuses (12) eine Auslassöffnung (1.3) hat,
- ein elastisches Vorspannelement (5) und/oder ein Aktuator eine Kraft in Richtung der Auslassöffnung (1.3) auf den zweiten Anker (4) ausübt,
- der zweite Anker (4)
∘ in der Geschlossenstellung mit einer Ventilsitzdichtung (6) an einem Ventilsitz (1.2) dichtend anliegt und in seiner Offenstellung wenigstens eine Durchlassöffnung des Ventilsitzes (1.2) freigibt, und
∘ in einer dem Ventilsitz abgewandten Stirnfläche (4.5), ein sich parallel zu der Längsachse (L) erstreckendes Sackloch (4.1) hat,
- das Sackloch (4.1) über wenigstens eine Fluidleitung (4.2) mit einem Hohlraum auf der dem Ventilsitz (1.2) zugewandten Seite des zweiten Ankers (4) kommunizierend verbunden ist,
- zumindest ein Segment einer Außenwandung (1.1) der Ventilhülse (1) und zumindest ein Segment einer Mantelfläche (2.4) des ersten Ankers (2) einen Spulensitz bilden,
- eine auslassseitige Stirnfläche (2.6) des ersten Ankers (2) und eine einlassseitige Stirnfläche (4.5) des zweiten Ankers (4) einen von einer Innenwandung (1.4) der Ventilhülse (1) umschlossenen Hohlraum in axialer Richtung begrenzen,
- ein Abschnitt der Mantelfläche (2.4) des ersten Ankers (2) einlassseitig in die Ventilhülse (1) eingreift, wodurch ein Spalt (1.8), mit einer hohlraumseitigen Spaltöffnung, ausgebildet wird, **dadurch gekennzeichnet, dass** die Innenwandung (1.4) der Ventilhülse (1) einlassseitig eine ringförmige Ausnehmung hat, die eine einlassseitige Auflagefläche (1.6) ausbildet, und dass ein Dichtungselement (8) zwischen der einlassseitigen Auflagefläche (1.6) der ringförmigen Ausnehmung der Innenwandung der Ventilhülse (1.4) und der auslassseitigen Stirnfläche (2.6) des ersten Ankers (2) eingespannt ist, wodurch die holraumseitige Spaltöffnung verschlossen wird.

2. Magnetventil nach Anspruch 1,
**dadurch gekennzeichnet, dass** der einlassseitig in die Ventilhülse (1) eingreifende Abschnitt des ersten Ankers (2) verjüngt ist, sodass ein einlassseitig an den eingreifenden Abschnitt des ersten Ankers angrenzender Abschnitt des ersten Ankers einen Anschlag ausbildet, der an einer ankerseitigen Stirnfläche (1.5) der Ventilhülse anliegt.

3. Magnetventil nach Anspruch 1 oder 2,
**dadurch gekennzeichnet, dass** die Mantelfläche (2.4) des ersten Ankers (2) an ihrem Übergang in die auslassseitige Stirnfläche (2.6) des ersten Ankers (2) eine Ringnut (2.8) hat; und dass das Dichtungselement (8) zwischen den die Ringnut (2.8) begrenzenden Flächen des ersten Ankers (2) und der Auflagefläche (1.6) eingeklemmt ist.

4. Magnetventil nach einem der vorstehenden Ansprüche,
**dadurch gekennzeichnet, dass**
das Dichtungselement (8) einen Teil des vom Hohlraum ausgebildeten Volumen einnimmt.

5. Magnetventil nach einem der vorstehenden Ansprüche,
**dadurch gekennzeichnet, dass**
ein Fitting (3) einlassseitig an dem ersten Anker (2) befestigt ist.

6. Magnetventil nach Anspruch 5,
**dadurch gekennzeichnet, dass**
das Fitting (3) eine ankerseitige Stirnfläche (3.3) mit einem Durchlass (3.2) hat, wobei der Durchlass (3.2) koaxial zur Längsachse (L) des Ventilgehäuses (12) ist.

7. Magnetventil nach Anspruch 5 oder 6,
**dadurch gekennzeichnet, dass**
zwischen der einlassseitigen Stirnfläche des ersten Ankers (2.5) und der ankerseitigen Stirnfläche (3.3) des Fittings eine durchgangskanalseitige Zwischenraumöffnung ist, und dass eine Zwischenraumabdichtung (9) zwischen einlassseitigen Stirnfläche des ersten Ankers (2.5) und ankerseitigen Stirnfläche (3.3) des Fittings eingespannt ist, wodurch die durchgangskanalseitige Zwischenraumöffnung verschlossen wird.

8. Magnetventil nach Anspruch 7,
**dadurch gekennzeichnet, dass**
die einlassseitigen Stirnfläche des ersten Ankers (2.5) eine Ringnut (2.7) hat, und dass die Zwischenraumabdichtung (9) in der Ringnut (2.7) angeordnet ist.

9. Magnetventil nach einem der Ansprüche 5 bis 8,
**dadurch gekennzeichnet, dass**
das Fitting (3) und der erste Anker (2) einstückig sind.

10. Magnetventil nach einem der vorstehenden Ansprüche,
**dadurch gekennzeichnet, dass**
das Sackloch einen ersten Abschnitt (4.11) mit einem ersten Durchmesser und einen zweiten Abschnitt (4.12) mit einem zweiten Durchmesser hat.

11. Magnetventil nach einem der vorstehenden Ansprüche,
**dadurch gekennzeichnet, dass**
der zweite Anker eine auslassseitig verjüngte Außenfläche (4.31) hat, in der die wenigstens eine Fluidleitung (4.2) mündet.

12. Magnetventil nach einem der vorstehenden Ansprüche,
**dadurch gekennzeichnet, dass**
ein Elektromagnet (10) auf dem Spulensitz angeordnet ist.

13. Magnetventil nach Anspruch 12,
**dadurch gekennzeichnet, dass**
die Ventilhülse (1) und/oder der erste Anker (2) einen Flansch hat, der ein Widerlager für den Elektromagneten (10) bildet.

## Claims

1. Solenoid valve (100) with a valve housing (12) consisting of a valve sleeve (1) and a first magnetic armature (2), which have a common longitudinal axis (L), and
with a second magnetic armature (4) which is mounted displaceable between an open position and a closed position parallel to the longitudinal axis in the valve housing, wherein
- the first armature (2) has two end faces and a through channel (2.1) connecting the end faces along the longitudinal axis (L) with an inlet opening (2.2) of the valve housing (12),
- the valve sleeve (1) has an outlet opening (1.3) on the side of the valve housing (12) facing away from the inlet opening (2.2),
- an elastic biasing element (5) and/or an actuator exerts a force on the second armature (4) in the direction of the outlet opening (1.3),
- the second armature (4)
∘ rests, in the closed position, with a valve seat seal (6) in sealing manner against a valve seat (1.2), and in its open position releases at least one passage opening of the valve seat (1.2), and
∘ has a blind hole (4.1) extending parallel to the longitudinal axis (L) in an end face (4.5) facing away from the valve seat,
- the blind hole (4.1) is communicably connected via at least one fluid line (4.2) to a cavity on the side of the second armature (4) facing the valve seat (1.2),
- at least one segment of an outer wall (1.1) of the valve sleeve (1) and at least one segment of a shell surface (2.4) of the first armature (2) form a coil seat,
- an outlet-side end face (2.6) of the first armature (2) and an inlet-side end face (4.5) of the second armature (4) delimit a cavity enclosed by an inner wall (1.4) of the valve sleeve (1) in axial direction,
- a section of the shell surface (2.4) of the first armature (2) engages the valve sleeve (1) on the inlet side, whereby a gap (1.8) with a gap opening on the cavity side is formed,
**characterized in that**
the inner wall (1.4) of the valve sleeve (1) has an annular recess on the inlet side, which forms an inlet-side support surface (1.6), and that a sealing element (8) is clamped between the inlet-side support surface (1.6) of the annular recess of the inner wall of the valve sleeve (1.4) and the outlet-side end face (2.6) of the first armature (2), whereby the cavity-side gap opening is closed.

2. Solenoid valve according to claim 1,
**characterized in that**
the section of the first armature (2) engaging in the valve sleeve (1) on the inlet side is tapered, such that a section of the first armature adjacent to the engaging section of the first armature on the inlet side forms a stop which rests against an armature-side end face (1.5) of the valve sleeve.

3. Solenoid valve according to claim 1 or 2,
**characterized in that**
the shell surface (2.4) of the first armature (2) has an annular groove (2.8) at its transition into the outlet-side end face (2.6) of the first armature (2); and that the sealing element (8) is clamped between the surfaces delimiting the annular groove (2.8) of the first armature (2) and the support surface (1.6).

4. Solenoid valve according to one of the preceding claims,
**characterized in that**
the sealing element (8) occupies part of the volume formed by the cavity.

5. Solenoid valve according to one of the preceding claims,
**characterized in that**
a fitting (3) is attached to first anchor (2) on the inlet side.

6. Solenoid valve according to claim 5,
**characterized in that**
the fitting (3) has an armature-side end face (3.3) with a passage (3.2), wherein the passage (3.2) is coaxial to the longitudinal axis (L) of the valve housing (12).

7. Solenoid valve according to claim 5 or 6,
**characterized in that**
there is a passage-side gap opening between the inlet-side end face of the first armature (2.5) and the armature-side end face (3.3) of the fitting, and that a gap sealing (9) is clamped between the inlet-side end face of the first armature (2.5) and the armature-side end face (3.3) of the fitting, whereby the passage-side gap opening is closed.

8. Solenoid valve according to claim 7,
**characterized in that**
the inlet-side end face of the first armature (2.5) has an annular groove (2.7), and that the gap sealing (9) is arranged in the annular groove (2.7).

9. Solenoid valve according to one of claims 5 to 8,
**characterized in that**
the fitting (3) and the first armature (2) are a unitary piece.

10. Solenoid valve according to one of the preceding claims,
**characterized in that**
the blind hole has a first section (4.11) with a first diameter and a second section (4.12) with a second diameter.

11. Solenoid valve according to one of the preceding claims,
**characterized in that**
the second armature has a tapered outer surface (4.31) on the outlet side, into which the at least one fluid line (4.2) opens.

12. Solenoid valve according to one of the preceding claims,
**characterized in that**
an electromagnet (10) is arranged on the coil seat.

13. Solenoid valve according to claim 12,
**characterized in that**
the valve sleeve (1) and/or the first armature (2) has a flange which forms an abutment for the electromagnet (10).

## Revendications

1. Électrovanne (100) avec un corps de vanne (12), composé d'un manchon de soupape (1) et d'un premier induit magnétique (2) qui ont un axe longitudinal (L) commun, et avec un deuxième induit magnétique (4) qui est supporté avec possibilité de translation parallèlement à l'axe longitudinal entre une position ouverte et une position fermée dans le corps de vanne, dans laquelle
- le premier induit (2) possède deux faces d'extrémité et un canal traversant (2.1) reliant les faces d'extrémité le long de l'axe longitudinal (L) avec une ouverture d'entrée (2.2) du corps de vanne (12),
- le manchon de soupape (1) possède une ouverture de sortie (1.3) sur le côté du corps de vanne (12) opposé à l'ouverture d'entrée (2.2) ;
- un élément de précontrainte élastique (5) et/ou un vérin exercent une force dirigée vers l'ouverture de sortie (1.3) sur le deuxième induit (4) ;
- le deuxième induit (4)
o repose de façon étanche sur un siège de soupape (1.2) avec un joint de siège de soupape (6) dans la position fermée et dégage au moins une ouverture de passage du siège de soupape (1.2) dans sa position ouverte et
o possède, dans une face d'extrémité (4.5) opposée au siège de soupape, un trou borgne (4.1) qui s'étend parallèlement à l'axe longitudinal (L) ;
- le trou borgne (4.1) communique par au moins une conduite de fluide (4.2) avec une cavité sur le côté du deuxième induit (4) tourné vers le siège de soupape (1.2) ;
- au moins un segment d'une paroi extérieure (1 .1) du manchon de soupape (1) et au moins un segment d'une surface d'enveloppe (2.4) du premier induit (2) forment un siège de bobine ;
- une face d'extrémité du côté de la sortie (2.6) du premier induit (2) et une face d'extrémité du côté de l'entrée (4.5) du deuxième induit (4) délimitent dans le sens axial une cavité renfermée par une paroi intérieure (1.4) du manchon de soupape(1) ;
- une partie de la surface d'enveloppe (2.4) du premier induit (2) se met en prise du côté de l'entrée dans le manchon de soupape (1), ce qui crée une fente (1.8) ouvrant du côté de la cavité ;
**caractérisée en ce que** la paroi intérieure (1.4) du manchon de soupape (1) possède, du côté de l'entrée, un creux annulaire qui forme une surface d'appui du côté de l'entrée (1.6) et **en ce qu'**un élément d'étanchéité (8) est serré entre la surface d'appui du côté de l'entrée (1.6) du creux annulaire de la paroi intérieure du manchon de soupape (1.4) et la face d'extrémité du côté de la sortie (2.6) du premier induit (2), de sorte que l'ouverture de la fente du côté de la cavité est fermée.

2. Électrovanne selon la revendication 1, **caractérisée en ce que** la partie du premier induit (2) qui s'engage du côté de l'entrée dans le manchon de soupape (1) est resserrée, de sorte qu'une partie du premier induit limitrophe de la partie engagée du premier induit du côté de l'entrée forme une butée qui repose sur une face d'extrémité du côté de l'induit (1.5) de l'électrovanne.

3. Électrovanne selon la revendication 1 ou 2, **caractérisée en ce que** la surface d'enveloppe (2.4) du premier induit (2) possède une gorge annulaire (2.8) à sa transition avec la face d'extrémité du côté de la sortie (2.6) du premier induit (2) et **en ce que** l'élément d'étanchéité (8) est coincé entre les surfaces du premier induit (2) et de la surface d'appui (1.6) délimitant la gorge annulaire (2.8).

4. Électrovanne selon l'une des revendications précédentes, **caractérisée en ce que** l'élément d'étanchéité (8) occupe une partie du volume formé par la cavité.

5. Électrovanne selon l'une des revendications précédentes, **caractérisée en ce qu'**un raccord (3) est fixé sur le premier induit (2) du côté de l'entrée.

6. Électrovanne selon la revendication 5, **caractérisée en ce que** le raccord (3) possède une face d'extrémité du côté de l'induit (3.3) munie d'un passage (3.2), lequel passage (3.2) est coaxial par rapport à l'axe longitudinal (L) du corps de vanne (12).

7. Électrovanne selon la revendication 5 ou 6, **caractérisée en ce qu'**il existe entre la face d'extrémité du côté de l'entrée du premier induit (2.5) et la face d'extrémité du côté de l'induit (3.3) du raccord une ouverture d'espace intermédiaire du côté du canal de passage et **en ce qu'**une garniture d'étanchéité d'espace intermédiaire (9) est serrée entre la face d'extrémité du côté de l'entrée du premier induit (2.5) et la face d'extrémité du côté de l'induit (3.3) du raccord, de sorte que l'ouverture d'espace intermédiaire du côté du canal de passage est fermée.

8. Électrovanne selon la revendication 7, **caractérisée en ce que** la face d'extrémité du côté de l'entrée du premier induit (2.5) possède une gorge annulaire (2.7) et **en ce que** la garniture d'étanchéité d'espace intermédiaire (9) est disposée dans la gorge annulaire (2.7).

9. Électrovanne selon l'une des revendications 5 à 8, **caractérisée en ce que** le raccord (3) et le premier induit (2) sont faits d'une pièce.

10. Électrovanne selon l'une des revendications précédentes, **caractérisée en ce que** le trou borgne possède une première partie (4.11) d'un premier diamètre et une deuxième partie (4.12) d'un deuxième diamètre.

11. Électrovanne selon l'une des revendications précédentes, **caractérisée en ce que** le deuxième induit possède une surface extérieure (4.31) resserrée du côté de la sortie, dans laquelle débouche l'au moins une conduite de fluide (4.2).

12. Électrovanne selon l'une des revendications précédentes, **caractérisée en ce qu'**un électroaimant (10) est disposé sur le siège de bobine.

13. Électrovanne selon la revendication 12, **caractérisée en ce que** le manchon de soupape (1) et/ou le premier induit (2) possèdent une bride qui forme un contre-appui pour l'électroaimant (10).
